# EUROPEAN PATENT APPLICATION

(11) **EP 2 830 278 A1**
(43) Date of publication of application: **28.01.2015**
(21) Application number: 14175980.3
(22) Date of filing: 07.07.2014
(51) Int. Cl.: H04L 29/06

(54) **Method of identification of multimedia flows and corresponding apparatus**

(30) Priority: 23.07.2013 EP 13306062
(71) Applicant: Thomson Licensing, 92130 Issy-les-Moulineaux (FR)
(72) Inventor: Chandrashekar, Jaideep, 92443 Issy-les-Moulineaux (FR)
(74) Representative: Barr, Angela Louise

(57) **Abstract**

The present invention generally relates to identification of multimedia flows, comprising
- reception (31) of flows;
- identification (32) of multimedia flows and multimedia flow source among received flows;
- if a multimedia flow is received,
- identification (34) of a type of the multimedia flow;
- identification (35) of an identity of content of the multimedia flow;

- forwarding of flows.

## Description

### 1. Field of invention.

The present invention generally relates to identification of multimedia flows (e.g. audio and/or video flows) received from any network. More specifically, the invention deals with capture of data regarding multimedia flows.

### 2. Technical background

Systems that measure popularity of television shows use so called *"household set meters",* which are connected to televisions in a small sample of households, and which log viewing habits of people in the home. Measures such as watched channels, pauses, etc. are recorded and reported back to the audience monitoring companies. This kind of method may provide biased measurements (due for example to the small sample size) or may not be adapted to measurements of audience of video shows provided by miscellaneous networks.

There is thus a need for optimization of the data collection process in order to have a more accurate monitoring of video watched, in particular in a house and more generally a more accurate monitoring of any multimedia flows (such as video and/or audio flows).

### 3. Invention summary

The present invention has been devised with the foregoing in mind.

A first aspect of the invention provides a method of identification of multimedia flows, comprising: reception of data flows; identification of multimedia flows among the received data flows; and forwarding of received data flows; wherein in the case where a received data flow is identified as a multimedia flow, the method further comprises, identification of a type of the multimedia flow; identification of an identity of content of the multimedia flow; and identification of a source of the multimedia flow.

In an embodiment the method includes collecting data on identified multimedia flows for analysis, for example statistical analysis. the identification of the source of the multimedia flow comprises identifying a channel of the multimedia flow, in the case where the multimedia flow corresponds to an audio service or a video service.

In an embodiment identification of multimedia flows comprises identifying a multimedia flow corresponding to web multimedia.

In an embodiment identification of a multimedia flow source comprises identification of a location identifier in the case where the multimedia flow corresponds to a web multimedia flow.

In an embodiment identification of a type of the multimedia flow comprises inspection of at least one content header in the multimedia flow in the case where the dataflow corresponds to a web multimedia flow.

In an embodiment identification of a type of the multimedia flow comprises statistical analysis of the traffic comprised in the multimedia flow

In an embodiment a data flow is considered as a multimedia flow if the statistical analysis based on flow traffic statistics on at least one parameter of the flow satisfies a given condition.

In an embodiment the identification of an identity of content of the multimedia flow comprises extraction of channel based on multimedia source identifier in the case where the video flow corresponds to a multimedia service.

In an embodiment the identification of an identity of content of the multimedia flow comprises an extraction of the identity of content from a program guide, in the case where the multimedia flow corresponds to a multimedia service.

In an embodiment the identification of an identity of content of the video flow comprises a collection of identity of content of the multimedia flow from a web location identified by a location identifier, if the multimedia flow corresponds to web multimedia content.

In an embodiment the method includes identification of a destination device consuming identified multimedia flows.

In an embodiment the method includes transmission of the identity of content of the multimedia flows to a server.

In an embodiment the method includes the identified multimedia flows are video flows;

A second aspect of the invention provides apparatus for identifying multimedia flows, comprising:
- a receiver of data flows;
- an identification module adapted to identify multimedia flows among the received data flows; and
- a forwarding module adapted to forward the received data flows
   - wherein the identification module is configured
      ■ to identify a source of the multimedia flow
      ■ to identify a type of the multimedia flow; and
      ■ to identify content of the multimedia flow;
         • in the case where the received data flow is identified as a multimedia flow

The apparatus is configured to perform the method of any embodiment of the first aspect of the invention.

A further aspect of the invention provides a gateway device comprising a receiver of data flows;
- an identification module adapted to identify multimedia flows among the received data flows; and
- a forwarding module adapted to forward the received data flows
   - wherein the identification module is configured
      ■ to identify a source of the multimedia flow
      ■ to identify a type of the multimedia flow; and
      ■ to identify content of the multimedia flow;

in the case where the received data flow is identified as a multimedia flow

A yet further aspect of the invention provides a computer program product for a programmable apparatus, the computer program product comprising a sequence of instructions for implementing a method according to any embodiment of the first aspect of the invention when loaded into and executed by the programmable apparatus.

Embodiments of the invention enable the collection of data regarding monitoring of multimedia, in particular of video and/or audio flows to be optimized.

### 4. List of figures

More advantages of the invention will appear through the description of particular, non-restricting embodiments of the invention, illustrated or not by means of the accompanying drawings. The description refers to the appended drawings in which:
- Figure 1 schematically illustrates an example of a communication network in which one or more embodiments of the invention may be implemented;
- Figure 2 schematically illustrates an example of the architecture of a gateway of the network represented in figure 1, according to a specific embodiment of the invention, the gateway being adapted to receive multimedia data;
- Figure 3 represents steps of a multimedia receiving method implemented in the gateway of figure 2 in accordance with an embodiment of the invention;
- Figure 4 illustrates examples of communication exchanges between different elements of the network of figure 1, including gateway of figure 2 in accordance with an embodiment of the invention; and
- Figure 5 diagrammatically illustrates functional elements of the gateway of figure 2 in accordance with one or more embodiments of the invention.

### 5. Detailed description of the invention

According to specific embodiments of the invention, a device receiving flows from one or several sources and forwarding them to one or several devices (e.g. user devices) identifies multimedia flows and multimedia flow source among received flows; this enables the device to identify a type of multimedia flow and an identity of its content (e.g. a description of a video program), if a received flow is identified as a multimedia flow. This provides the advantage of aggregating data on multimedia flows that transition through the device. It is advantageous, that a device that receives and forwards miscellaneous type of flows, including non video flow, flows corresponding to video service and other video flows, that are, for example, embedded in web flows, because this device can monitor any kind of traffic going through it. If this device is, for example, a home network gateway, it can monitor all or most of multimedia traffic entering the home network and get very accurate data on the nature of this traffic. According to miscellaneous embodiments, multimedia data related video, audio and audio/video data are tracked by the device. According to variant of the invention, the data collected by the device on the nature of the traffic is sent to a server or a summary or synthesis of collected is performed by the device before it sends the summary or synthesis to a server.

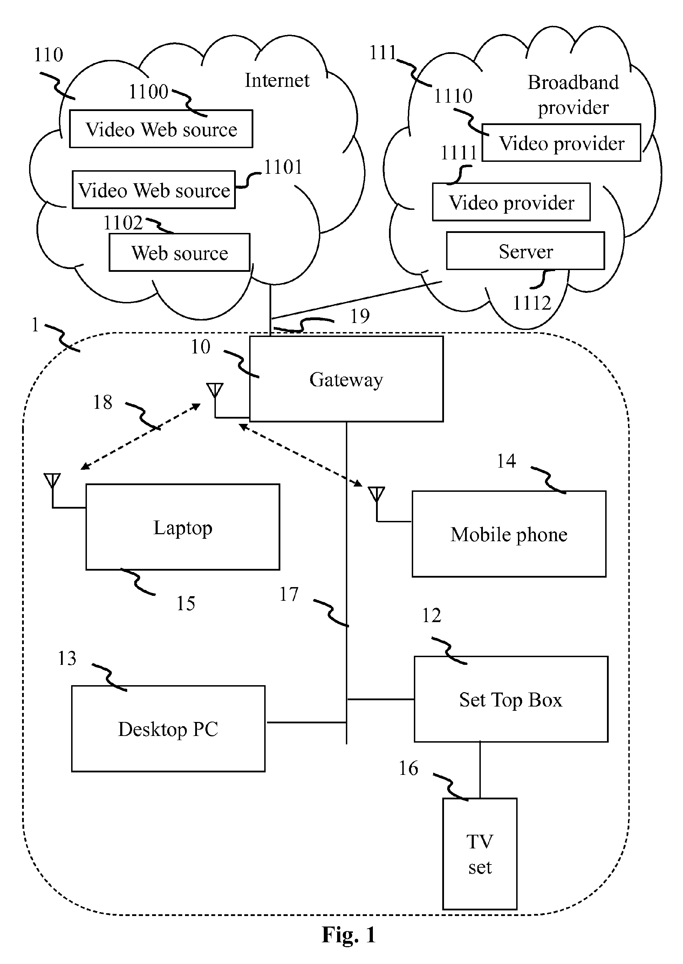

**Figure 1** represents a typical environment in which one or more embodiments of the invention may be implemented. The figure 1 comprises a home network (HN) or Local Area Network (or LAN) 1, an internet network 110 and a broadband provider network 111.

The internet network 110 comprises, among several others, video web sources 1100 and 1101, and web sources 1102. The network 111 comprises one or several video provider servers 1110 and 1112, and a collecting server 1112.

The network 1 comprises a wired data communication network and a wireless data communication network. The network 1 comprises a gateway 10 compliant with the invention and that is connected to internet network 110 and/or broadband provider network 111 through a communication link 19, that is wireless or wired according to various possible implementations. The network 1 also comprises devices connected to the gateway 10 through a wireless link 18 (e.g. of WiFi type) or wired link 17 (e.g. of Ethernet type); these devices include mobile phones 14 and 15, a set top box 12 connected to a TV set 16 and a laptop or tablet 15. Gateway 10 provides the devices in the network 1 with an access to the networks 110 and 111. These devices are adapted to receive video flows from the gateway 10.

In the network 1, data communication speeds are adapted to video transmission, typically greater than 2 Mbit/s for the wireless network, and greater than 100Mbit/s for the wired network.

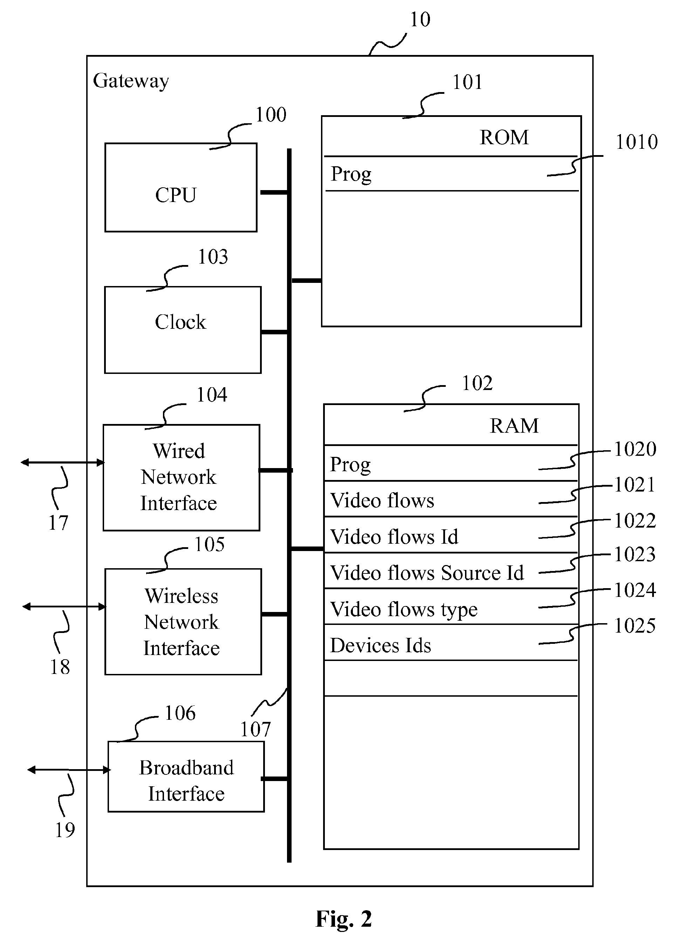

**Figure 2** schematically illustrates a particular embodiment of the gateway 10 of the network 1.

In the context of the invention, a gateway is a device that is able to receive flows from one or several sources (including multimedia flows, e.g. audio, video and audio/video flows) and to forward them to one or several devices, such as TV sets, set top boxes, computers, laptops, tablets, mobile devices... It can be any kind of home internet gateway or network gateway. Several kinds of flows are transiting through the gateway, typically IPTV traffic and internet traffic. Thus, the gateway 10 is an aggregation point, able to see miscellaneous kinds of flows, including multimedia flow corresponding to a multimedia service (e.g. VOD (Video On Demand), broadband video from a service provider) and including a multimedia flow corresponding to web multimedia, the multimedia source(s) (e.g. Dailymotion ® on www.dailymotion.com, Youtube ® on www.youtube.com) being on the web (i.e. Internet and more globally any kind of network or collection of networks, containing miscellaneous contents that can be accessed by a multimedia device, typically through the gateway 10). Usually, a multimedia service flow is delivered from a source to one or several devices through the gateway 10, as a managed service (usually multicast service, e.g. IP multicast for IPTV), whereas a multimedia corresponding to a web multimedia is delivered over unicast from a source to a device through the gateway 10.

The gateway 10 comprises, connected to each other by an address and data bus 107, also transporting a clock signal:
- a microprocessor 100 (or CPU),
- a non-volatile memory of the ROM type (Read Only Memory) 101,
- a Random Access Memory or RAM 102,
- a clock 103,
- a wired network interface 104 adapted to be connected to the wired link 17,
- a wireless network interface 105 adapted to be connected to the wireless link 18,
- a broadband Interface 106 adapted to connected to networks110 and 111 through communication link 19.

Each of the elements 100 to 107 is well known by a person skilled in the art. These common elements are not described here.

It is noted that the word "*register*" used in the description of the memories 101 and 102 designates in each of the memories mentioned, a memory zone of low capacity (some binary data) as well as a memory zone of large capacity (enabling a whole program to be stored or all or part of the data representing an audio/video received flow).

The ROM memory 101 notably comprises a "*prog*" program 1010. The algorithms implementing the steps of the method specific to the invention and described below are stored in the memory ROM 101 associated with the gateway 10 implementing these steps, and more specifically in program 1010. When powered up, the microprocessor 100 loads in RAM 102 and runs the instructions of these algorithms.

The random access memory 102 notably comprises:
- in a register 1020, a loaded program corresponding to program 1010 ;
- a received video flow in a register 1021 ;
- a video flow identifier in a register 1022;
- a video flows source identifier 1023;
- a video flows type (such as IPTV video or web video) 1024,
- devices identifiers (that refers to any devices of network 1) 1025, e.g. an address (such as a MAC (Medium Access Channel) address) or any host name information, that may be configured by the user (e.g. "*Peter-PC*"), which is available in the gateway 10).

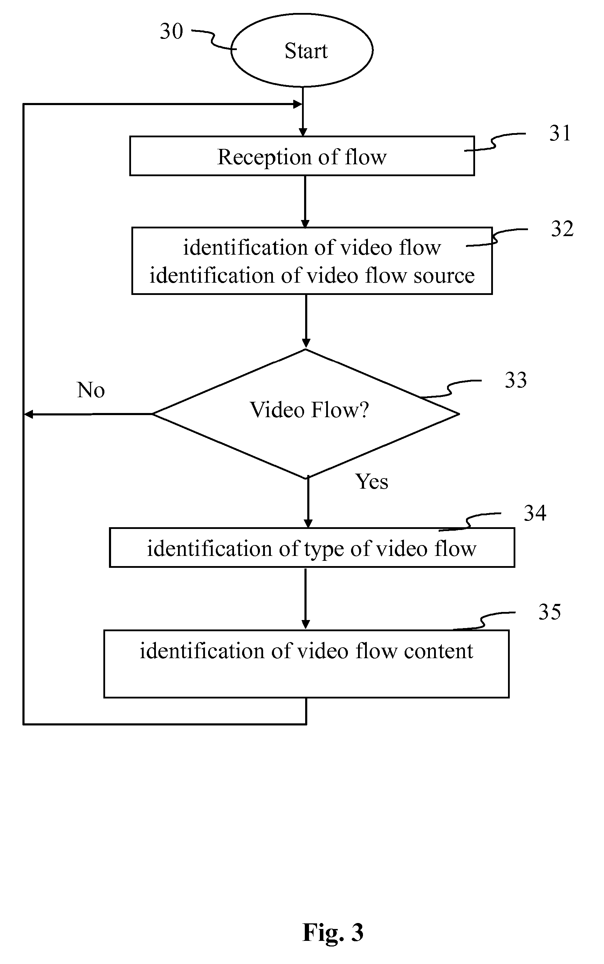

**Figure 3** schematically illustrates an example of flow management implemented in the gateway 10 in accordance with an embodiment of the invention. All or a large part of traffic downloaded by any device of the network 1 is going through the gateway 10. Such, embodiments of the invention being implemented in the gateway offers an advantage of single location to monitor data corresponding to video traffic. The gateway 10 is able to process, analyze and deals with various contents that are received by different devices through the gateway and with different formats (e.g. IPTV or web video). Embodiments of the invention advantageously provides accurate data on video contents received by the devices in the network interfaced with outside network(s) by the gateway.

During a first step 30, the gateway 12 initializes its various components and variables.

Then, during a step 31, the gateway 1 receives flows from any source among video web sources 1100 and 1101, web sources 1102 and video provider servers 1110 and 1111. The flows are of different types, e.g. dedicated TV flows or non-dedicated TV flows. Video providers servers 1110 and 1111 are providing dedicated TV flows, such as IPTV (Internet Protocol TeleVision) flows based on IGMP (Internet Group Management Protocol) signalling and multicast transport. According to different variants of the invention, other dedicated TV flows, such as DVB (Digital Video Broadcasting) are received and monitored by the gateway 10. These dedicated video flows are based on multicast transport.

An example of a non-dedicated video flow is a web content (typically based on an URL) provided by a video web source 1100 or 1101 (such as a YouTube ® or DailyMotion ® server).

Then, during a step 32, the gateway 10 identifies video flows and video flow source among received flows. Typically, the gateway 10 identifies a dedicated video flow, e.g. an IGMP stream, as a video flow.

When the received flow is not a dedicated video flow, the gateway 10 inspects content headers in received flows; e.g. the gateway checks if the flow includes a media type such as MIME-TYPE encoding in the payload carried in a http stream. Every piece of content fetched from the web has a MIME-TYPE and is used by the web browser to process the content appropriately. For instance, a normal web page has MIME-TYPE=text/html or text/plain. A video would have MIME-TYPE=video/avi, video/mpeg (or other well known designation).

Some video traffic (e.g. that are not following a standard such as http or similar) may not have media type such a MIME-TYPE, that can unambiguously identify the traffic flow as being that for video. Some media type may also be encrypted and not understood by the gateway 10. To notably handle such situations, as an alternative embodiment, the gateway 10 uses side information or performs a statistical method. Regarding the use of side information, the gateway 10, for example, monitors previous received URL frames, that may refer to URL usually used for video (e.g. URL associated with YouTube ® or DailyMotion ®). If a received URL frame correspond to a URL usually used for video, the gateway identifies this URL (e.g. by comparing URL with a set of video URL, that is locally registered or available on a distant server) and considers that following frames correspond to video. When the gateway 10 performs a statistical method, it uses statistical properties of a video flow to identify video flows among received flows. For example, if the flow corresponds to a HTTP stream with a duration that is longer than a few seconds, it is likely to be a HTTP video stream identified in step 32. According to the statistical method applied to a flow corresponding to a web flow, the gateway 10 makes an analysis based on at least a flow traffic statistics on at least a parameter of the flow is within at least a defined range (i.e. an interval between a minimum value and a maximum value or range just defined by a maximum value or by a minimum value). a classifier inside the gateway 10 classifies the received flow as a video flow, a chat flow or a web flow. In specific embodiment, the classifier is collecting data on the received flow and estimates at least a parameter such as number of received packets, number of received bytes or bits per time unit, packet length statistics (such as average, median, maximum and/or minimum value), inter-packet lengths statistics (min, max, mean, standard deviation), flow duration, connection duration, number of transitions between transaction mode and bulk transfer mode... If, according to a defined rule, at least one, some or all estimated parameters is greater a defined threshold, then the classifier classified the received flow as a video flow. e.g, if the number of received bytes exceeds a minimum video size threshold (e.g. 100 Mbytes), then, the received flow is classified as a video flow; else, the received flow is classified as a non-video flow. According to an embodiment, the defined rule is using several parameters and corresponding thresholds: for example, if the median data rate of the flow is above a median data rate threshold (e.g. 5Mbits/s), and the average packet size is above an average packet size threshold (e.g. 1000 bytes), then the gateway 10 concludes that the flow corresponds to a video flow. This merely represents an example. According to an embodiment of invention, the gateway 10 includes configurable (by a user or a distant network server) detectors (parameters and associated threshold, with rules (e.g. a given parameter is greater than a first threshold and lower a second threshold), which have different properties in terms of the detection and false positive rates. The defined threshold(s) is (are) predefined (e.g. fixed value(s) stored in ROM) according to a first embodiment or determined using machine learning techniques according to variant second embodiment.

During step 32, if a flow is identified as a video flow, the gateway 10 identifies the video flow source; according to different variants of the invention, the identification of the video flow source comprises an identification of a channel, if the multimedia flow corresponds to a video service (and possibly to an audio service). The gateway typically determines an identification of the video provider or video web source (a location identifier, e.g. URL used to get the video web source or IP address). According to an embodiment, the video flow source identification simply comprises a type of source, e.g. web source or broadband provider.

Then, during a test 33, if the received flow is not a video flow as determined during step 32, the gateway awaits a new flow in step 31.

Otherwise, a received flow is identified as a video flow (during step 32), during a step 34, the gateway 10 identifies a type of the received video flow: video traffic for dedicated flow corresponding to a video service (typically IPTV flow) or video traffic from another network (typically from the web or Internet, that corresponds to a collection of other networks).

According to a first embodiment of the invention, the gateway 10 identifies two types, that can be represented as a boolean: video traffic for dedicated flow corresponding to a video service or video traffic of another type. According to an embodiment of the invention, the gateway 10 identifies three types: video traffic for dedicated flow corresponding to a video service or video traffic of another type or other traffic,that includes no video traffic.

Then, during a step 35, the gateway 10 identifies an identity of content of the video flow. In an embodiment of the invention, the identification of an identity of content of the multimedia flow comprises an extraction of channel based on multimedia source identifier if the video flow corresponds to a multimedia service. More specifically, if the flow corresponds to an IGMP stream, it corresponds to a TV channel (e.g. BBC1 or CNN) being watched on a television or similar device, and the IGMP stream (address and stream identifier) is mapped to a particular TV channel (this can be used to index the particular program being watched). According to a specific embodiment, the identification of an identity of content of the multimedia flow comprises an extraction of the identity of content from a program guide, if the multimedia flow corresponds to a multimedia service. In particular, when IGMP is used in a received video flow, the gateway 10 asks a EPG server to send it an identity of the content of the video flow by sending a request to the EPG server with an information on time and channel (the channel is extracted from the video flow) (example of transaction from the gateway 1 to an EPG server: "*program at channel*/*igmp=224.12.13.190 at time=3:02*"). The EPG server is available to the network service provider and its address is a parameter, that is registered in the gateway 10 or that the gateway 10 gets from a identified server.

According to a specific embodiment, the identification of an identity of content of the video flow comprises a collection of identity of content of the multimedia flow from a web location identified by a location identifier, if the multimedia flow corresponds to web multimedia content. In particular, if the flow identified as a video flow corresponds to a HTTP stream, the gateway 10 locates an original URL/webpage/resource from where the user starts to watch the video (or where the video was embedded) and identifies web/internet multimedia flows. If the flow identified as a video flow corresponds to a HTTP stream with a specific mime-type, the gateway 10 identifies a particular content being watched by inspecting the destination URL, and other context that might be available on the web page or resources.

According to another embodiment of invention, , especially, if the flow identified as a video flow does not correspond to a HTTP stream with a specific mime-type, the gateway 10 analyses a sequence of URL including URL containing a video flow; in particular, the gateway 10 analyses URL or any other frames from or to a server to identify a video content (e.g. by extracting an information representative of video content in a URL pointing to the URL containing a video flow). As illustration, here is a scenario including user's actions associated with a sequence of URL, one URL containing a video flow:
(i) a user first goes to a web site containing video, e.g. DailyMotion.com; the gateway 10 monitors a URL containing "*dailymotion.com*" reference in an access from a device of network 1 to Internet 110;
(ii) the user spends some time looking at links provided by the web site, the gateway monitoring frames from the web site and addressed to the device of network 1;
(iii) the user settles on a particular piece of content (denoted *C*) that is available at page *P_c*; the page *P_c* also contains a description of said content; the gateway monitors the description of said content and keeps it in memory at least during a memory time during which the user can upload the content;
(iv) the user clicks on the video and begins to watch; the gateway 10 identifying a video flow, identifies the identity of the content based on description of content kept in memory in step (iii).

During step (iv), the gateway 10 identifies the flow as being a video flow. By also keeping track of the history of user navigated pages, the gateway associates video flow *C* with page *P_c*; in order to identify the video flow and to get some meta data about the video, the gateway parses the meta data that is available in *P_c*.

According to an advantageous embodiment, the gateway 10 identifies video flows and extracting data from the video traffic received from a source and forwarded to another device (typically a user device or end terminal), without using control specific control data.

According to another embodiment of invention, the gateway 10 also uses control frames associated to video flows to extract data on the video flows. In many situation, the video is fetched incrementally from a remote server and played locally on a user device. When the user wants to send some commands on video content, e.g. pause, fast forward, reward, skip commands, the actual operation is carried out by sending signals to the remote server, which then tracks the appropriate part of the content. Since the gateway 10 also sees all these signals, it tracks them (at least at a coarse level), and associate them with the content being watched. In view of these commands, the gateway identifies a video flows. In addition, in view of these commands, the behavior of the traffic is changing: e.g. if a video is played back (rewind) or fast forward, the gateway 10 sees an interruption of multicast traffic (e.g. by decoding a IGMP leave command) and unicast traffic generally coming from different sources is starting.

According to a specific embodiment of the invention, the gateway 10 identifies a destination device consuming identified a video flow and more generally a multimedia flow. If this flow corresponds to a flow from a web flow, the gateway 10 identifies an identifier of the destination of the flow (e.g. a MAC address, an IP address or any other device identifier 1025). If this flow corresponds to a service flow, the gateway 10 identifies a destination device. If no specific device can be identified or if the system is configured to provide a general identifier, the gateway 10 identifies the network 1 or any identifier associated to the network 1 as being the destination of the video. Then, the gateway 10 associate the identity of content that is consumed and destination device consuming the content (or destination network 1 if configured to do so, or if the device is not known).

According to a specific embodiment of the invention, the gateway 10 transmits the identity of content of the video flow to a collecting server. This transmission may be performed on request by the server or any other device, on occurrence of an event (for instance when a determined quantity of information has been gathered or when some memory must be freed), on determined time and/or date (e.g. each day or each Monday at 12:00) or periodically (e.g. every day). According to an embodiment, the gateway 10 transmits available information including identity of content alone or identity of content with at least another parameter (e.g. parameters among identity of device or network that has consumed the content, time, date and/or duration of content (e.g. 2 hours), type of source, identifier of source, degree of confidence of collected data (100% if based on reliable information, a lower value if based on statistical method)), method used to get data. According to another variant, the gateway 10 aggregates available information before transmitting it to the collecting server (e.g. data are grouped by content identity, source of content, identifiers of consuming device or network, type of source). After the data have been transmitted and acknowledged by the collecting server, the gateway 10 can delete collected data.

The same logic applies to identifying content that is read (based on the web page), and audio (such as music) streams.

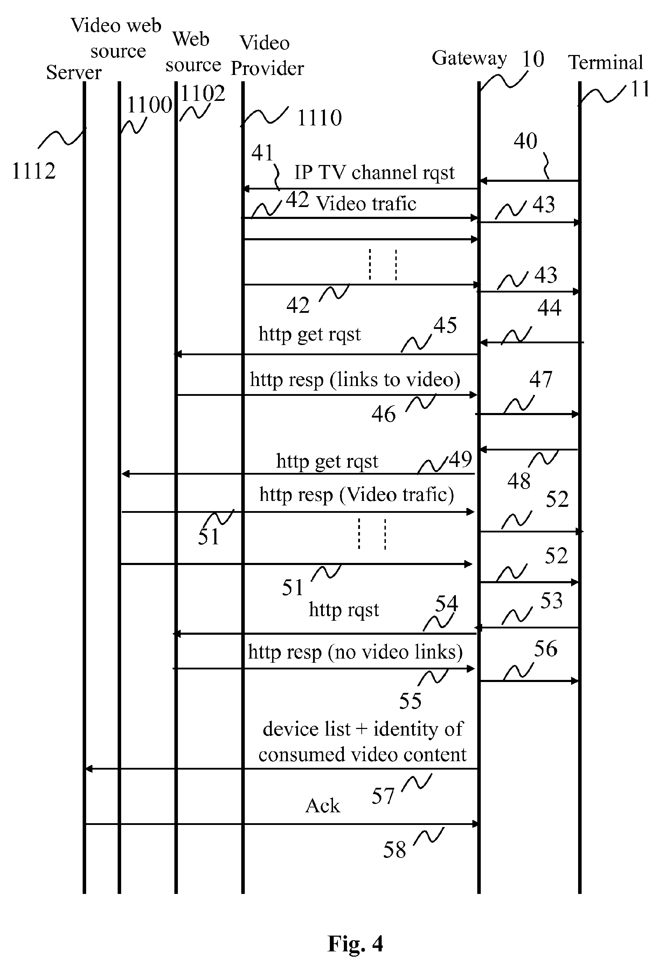

**Figure 4** illustrates examples of communication exchanges between different elements of the network of figure 1, including the gateway 10, a terminal 11, the video provider 1110, the web source 1102, the video web source 110 and the server 1112. The terminal 11 can be any device of network 1, that is connected to gateway 10; typically, the terminal 11 is one of any device 12 to 16.

A first example of video traffic transfer from the video provider 1110 to the terminal 11 is illustrated. The terminal 11 sends an IP TV channel request 40 (e.g. join <multicast-address>) to the gateway 10, that forwards it to the video provider 1110 (request 41 (e.g. join <multicast-address>)). This causes terminal 11 to become part of a new multicast tree; all nodes of the particular multicast tree receive video frames for the particular channel. In some embodiments, the terminal 11 first begins to receive unicast traffic from a single unicast server to build up a short playout buffer before switching to the multicast tree. Once terminal 11 is part of the multi-cast tree, it receives traffic frames 42 corresponding to the channel that has been joined. By extracting the multi-cast address in requests 40 (forwarded to video provider 1110 in request 41), and verifying membership to the multicast tree, the gateway 10 extracts useful data from frame 40 and a multiplicity of frames 42 to identify a video flow, a video flow multicast address. Since each channel corresponds to a single, unique TV channel, the actual channel being watched can be extracted from a look-up table. Furthermore, the current time can be used to index into a TV Guide to obtain the identity of the actual program being viewed by an end-user, as illustrated in figure 3. The gateway 10 stores extracted data in RAM 102.

A second example of communication exchange between the web source 1102, the video web source 1102 and the terminal 11 is illustrated. The terminal 11 sends a video location request 44 (e.g. HTTP GET http://www.google.com/search?<search-string>) to the gateway 10, that forwards it (without change) to the web source 1102 (request 45). The web source 1102 answers by sending a link to the video the terminal 11 through the gateway 10 (responses 46 and 47 (e.g. HTTP/1.1 200 OK, Date: Thu, 05 Apr 2012 18:52:23 GMT, Content-Type: text/plain; charset=ISO-8859-1) which is a header to the actual traffic flow. The gateway 10 extracts useful data from response 46 and identifies that it is not video traffic (in this case, the MIME-TYPE is text/plain). The terminal 11 sends a video request 48 (e.g. http://youtube.com/videoplayback?algorithm=throttle-factor&burst=40&clen= 750383&cp=U) to the gateway 10, that forwards it to the video web source 1100 (request 49). The video web source 1102 answers by sending video traffic (frames 51 and 52) to the terminal 11 during the time necessary to transfer the video. The frames are prefaced with information about the content of the traffic flow (e.g., HTTP/1.1 200 OK, Date: Thu, 05 Apr 2012 18:52:23 GMT, Content-Type: video/avi; charset=ISO-8859-1). Typically, users do not enter long urls for video traffic directly, but instead navigate to a container page (e.g., www.youtube.com?topvideos), which have a list of videos, and then select from one of them. In such a case, by tracking the sequence of connections, the gateway 10 extracts useful data from frames 51 to identify a video flow, a video flow source, a type of video flow and an identification of content of the video flow as illustrated in figure 3. The gateway 10 stores extracted data in RAM 102.

A third example of communication exchange between the web source 1102, and the terminal 11 is illustrated. The terminal 11 sends a request 53 (e.g. http request) to the gateway 10, that forwards it to the web source 1102 (request 54). The web source 1102 answers by sending a response 55, that, in this example, contains no video flow, (e.g. http response) to the gateway that forwards it to the terminal 11 (responses 56). The gateway 10 extracts useful data from response 55 and identifies that it is not a video traffic.

Then, the gateway 10 sends collected data, that are stored in RAM 102, in a frame 57 ({time, device MAC address, URL/Multicast Address, Content identifier} corresponding to all video transactions that were recorded since the last communication with the server, including here data corresponding to video traffics 42 and 51) to the server 1112. The frame 57 includes a type of frame corresponding to collected data (e.g. a specific type that is recognized by the server 1112), address of destination server 1112, an identifier or address of gateway 10 and collected data, according to a format that can be decoded by the server 1112 (typically the frame format is defined, it is known and recognized by the server 1112). The server 1112 stores received data and acknowledges reception of data to the gateway 10 in an Ack frame 58. Then, the gateway deletes corresponding data from RAM 102. The data sent in frame 57 includes at least a part of data stored in RAM 102, including video flows 1021, video flows identifiers 1022, video flow source identifiers 1023, video flow types 1024, devices ids 1026. According to an embodiment of the invention, the gateway 10 computes some statistics ( {device MAC address, number of shows watched in 24 hour period}) based on collected data and forward the resulting statistics to the server 1112 in a dedicated frame, that can be decoded by the server 1112. According to another variant, the gateway 10 aggregates a part of collected data (e.g. all data related to a same device Identifier 1026 or video flows source Id) and sends corresponding aggregated data to the server 1112.

The sending of sending of collected data by the gateway 10 to the server 1112 may be implemented in various way according to the invention. This sending may be done each time a data or a defined set of data has been collected. The sending may also be triggered by an event (such as a request from the server, a user operation, the collection of data of a determined nature, or related to a specific source or content). It may also be done in a periodic way (e.g. one a day or a week).

According to other variants of the invention, that may be combined with previous various embodiments, the gateway collects other kind of data from the monitored frames coming from an external network to the terminal 11 (e.g. size of video, duration of video, numbers of pauses, number of fast forwards or backwards of video...) and send this data or statistics computed from these data to the server 1112.

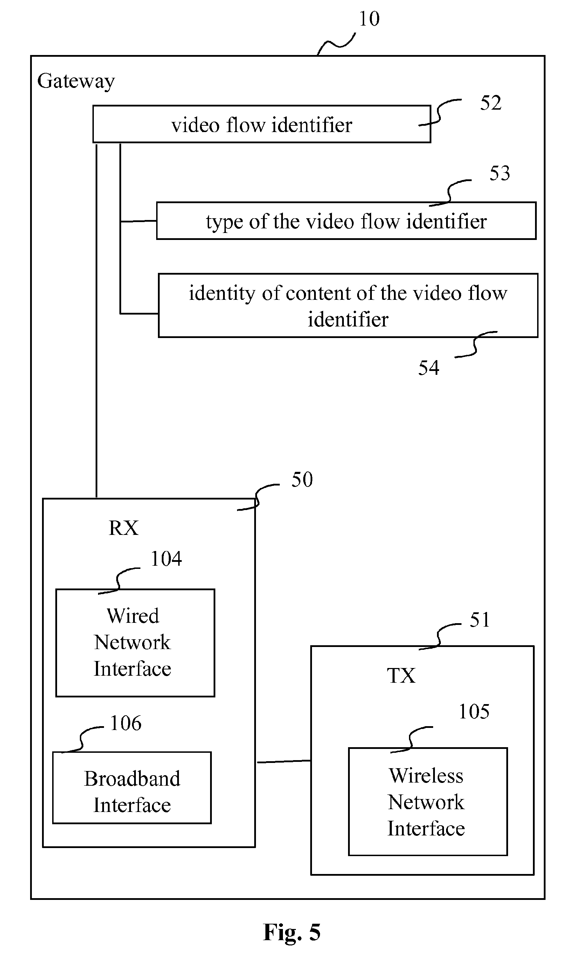

**Figure 5** illustrates the functional elements of gateway 10 in accordance with an embodiment of the invention, including:
- a receiver 50 able to receive frames from external networks;
- an identifier module 52 adapted to identify a video flow among flows received by receiver 50 and able to perform step 31;
- an identifier module 53 adapted to identify a type of the video flow among video flows identified by the module 52 and able to perform step 34;
- an identifier module 54 adapted to identify an identity of content of the a video flow identified by the module 52 and able to perform step 35; and
- a forwarder 51 able to forward frames received by receiver 50 to a device of local network 1.

Naturally, the invention is not limited to the embodiments previously described.

In particular, the invention is compliant with any type of gateway that is adapted to monitor some traffic that comes from outside a network to one or several devices of the network.

The implementations described herein may be implemented in, for example, a method, an apparatus, a software program or a system. Even if only discussed in the context of a single form of implementation (for example, discussed only as a method or a device), the implementation of features discussed may also be implemented in other forms (for example a program). The gateway may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device..

Additionally, the methods may be implemented by instructions being performed by a processor in the gateway, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced or got by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

The invention is not limited to identification of video flows, rather it applies to identification of any kind of multimedia flows, including audio flows and/or video flows and identification of any combination of flows of multimedia including video and audio data. The identification of audio flows is done on a similar way to identification of video flows. In particular, audio flows can correspond to an audio service (pure audio service without video or an audio service with additional data) or to an audio flow in a web multimedia. If an audio flow is received, the gateway identifies a type of audio flow. The audio flows are of different types, e.g. dedicated audio flows or non-dedicated audio flows. Audio providers servers are providing dedicated audio flows based on multicast transport. An example of a non-dedicated audio flow is web content (typically based on an URL) provided by an audio web source. The gateway 10 identifies an identity of content of the video flow. In an embodiment of the invention, the identification of an identity of content of the multimedia flow comprises an extraction of channel (e.g. radio channel) based on radio source identifier if the audio flow corresponds to a multimedia service. According to a specific embodiment, the identification of an identity of content of the audio flow comprises a collection of identity of content of the audio flow from a web location identified by a location identifier, if the multimedia flow corresponds to web audio content. In particular, if the flow identified as a audio flow corresponds to a HTTP stream, the gateway locates an original URL/webpage/resource from where the user starts to listen to the audio contents and identifies web/internet audio flows. The gateway identifies an audio flow similarly to what is done to identify a video flow, with some adaptation of parameters when necessary. In specific embodiments the gateway identifies an audio flow using some contents of the audio flow itself and/or in previous frames sent from a distant network to the local network and/or using some commands sent by a local device to the distant network (such as rewind, fast forward...) and/or using statistical method (if the flow correspond to a web flow, with parameters in at least a defined range corresponding to audio flow (e.g. a data rate of 64kbit/s)). Similarly to video flows, in specific embodiments, the gateway identifies an audio flow source, that comprises an identification of a location identifier if the audio flow corresponds to web video. According to an embodiment, the identification of a type of the audio flow comprises an inspection of contents headers in flow. s if the flow corresponds to a web flow. According to some embodiments, the identification of an identity of content of the audio flow comprises an extraction of the identity of content from a program guide, if the multimedia flow corresponds to a multimedia service. Similarly to video, the gateway identifies a destination device consuming identified audio flows and transmit identity of content of the audio flows and possibly, according to different variants, at least one other parameter to a server.

According to different variants of the invention, the gateway identifies all the multimedia flows that it monitors (audio and/or video) or a part of multimedia flows (e.g. clearly identified flows (i.e. without using a method such as statistical method to identify flows that are not explicitly identified as multimedia flows). According to other variants, the gateway applies a filter on monitoring (e.g. only some type of traffic or a specific content are monitored and reported to a distant server).

## Claims

1. Method of identification of multimedia flows, comprising:
- reception (31) of data flows;
- identification (32) of multimedia flows among the received data flows; and
- forwarding of received data flows;
- wherein in the case where a received data flow is identified as a multimedia flow, the method further comprises,
identification (34) of a type of the multimedia flow;
identification (35) of an identity of content of the multimedia flow; and
identification of a source of the multimedia flow.

2. Method according to claim 1 further comprising collecting data on identified multimedia flows for statistical analysis.

3. Method according to claim 1 or 2, wherein the identification of the source of the multimedia flow comprises identifying a channel of the multimedia flow, in the case where the multimedia flow corresponds to an audio service or a video service.

4. Method according to any preceding claim, wherein identification of multimedia flows comprises identifying a multimedia flow corresponding to web multimedia.

5. Method according to claim 4, wherein identification of a multimedia flow source comprises identification of a location identifier in the case where the multimedia flow corresponds to a web multimedia flow.

6. Method according to claim 4 or 5, wherein identification of a type of the multimedia flow comprises inspection of at least one content header in the multimedia flow in the case where the dataflow corresponds to a web multimedia flow.

7. Method according to any preceding claim, wherein identification of a type of the multimedia flow comprises statistical analysis of the traffic comprised in the multimedia flow

8. Method according to claim 7 wherein a data flow is considered as a multimedia flow if the statistical analysis based on flow traffic statistics on at least one parameter of the flow satisfies a given condition.

9. Method according to any preceding claim, wherein the identification of an identity of content of the multimedia flow comprises extraction of channel based on multimedia source identifier in the case where the video flow corresponds to a multimedia service.

10. Method according to any preceding claim, wherein the identification of an identity of content of the multimedia flow comprises an extraction of the identity of content from a program guide, in the case where the multimedia flow corresponds to a multimedia service;

11. Method according to any preceding claim, wherein the identification of an identity of content of the video flow comprises a collection of identity of content of the multimedia flow from a web location identified by a location identifier, if the multimedia flow corresponds to web multimedia content;

12. Method according to any preceding claim, comprising identification of a destination device consuming identified multimedia flows;

13. Method according to any preceding claim, comprising transmission of the identity of content of the multimedia flows to a server;

14. Method according to any preceding claim, wherein the identified multimedia flows are video flows;

15. Apparatus for identifying multimedia flows, comprising:
- a receiver (50) of data flows;
- an identification module (52) adapted to identify multimedia flows among the received data flows; and
- a forwarding module (51) adapted to forward the received data flows
- wherein the identification module is configured
■ to identify a source of the multimedia flow
■ to identify a type of the multimedia flow; and
■ to identify content of the multimedia flow;
• in the case where the received data flow is identified as a multimedia flow

16. A gateway device comprising an apparatus according to claim 15.

17. A computer program product for a programmable apparatus, the computer program product comprising a sequence of instructions for implementing a method according to any one of claims 1 to 14 when loaded into and executed by the programmable apparatus.
